# EUROPEAN PATENT APPLICATION

(11) **EP 1 843 592 A1**
(43) Date of publication of application: **10.10.2007**
(21) Application number: 06251933.5
(22) Date of filing: 05.04.2006
(51) Int. Cl.: H04N 7/24

(54) **Controlling media content quality**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

The present invention relates to controlling the provision of media content such as video images to one or more viewers, and in particular but not exclusively to controlling the quality of streamed media content. The present invention provides a method of operating an electronic apparatus to play media content, the method comprising receiving the media content from the media server and playing the media content, detecting the presence or absence of faces within a predetermined area, and instructing playing the media content at a quality level dependent on the detection of a face.

## Description

### Field of the Invention

The present invention relates to controlling the provision of media content such as video images to one or more viewers, and in particular but not exclusively to controlling the quality of streamed media content.

### Background of the Invention

Equipment for providing media content such as video images are well known and include the video cassette recorder (VCR), digital video disc players (DVD), hard disc drive based recorders (HDD), terrestrial, cable and satellite TV set top boxes coupled to a viewing device such as a television set (TV). Increasingly personal computers are also being used to provide media content, and may include DVD disc readers, TV tuner capture cards, and Internet file download and streaming facilities. Streaming media is increasingly being used for fast and convenient access to media content such as Video on Demand (VoD) and is typically implemented using a remote storage server transmitting over a network to a receiving apparatus such as a computer or mobile phone. Typically the quality of the media content streamed will depend on the bandwidth of the network over which it is transmitted, for example using a Broadband Internet connection a high quality level media content transmission may be made whereas over a wireless network the same media content may need to be transmitted at a lower quality level given the constraints of the lower bandwidth connection.

The media content quality level can be adjusted by using different compression technology (data rate) resulting in less packets to be sent over a unit time, a reduced number of frames for video, and lower resolution images. The quality of media content can also be adjusted dynamically, for example British Telecoms Fastnet video streaming technology provides media content in a number of different quality formats, and switches between them depending on network congestion. Thus if the network becomes congested, the media server switches to streaming a lower quality level media content to the consuming device, for example a mobile phone. This is described in Walker, M. D., Nilsson, M., Jebb, T. and Turnbull R. Mobile Video-Streaming, BT Technology Journal, Vol. 21, No. 3. (September 2003), pp. 192-202.

### Summary of the Invention

The present invention provides a method of playing media content at different quality levels depending on the attentiveness of the user(s). In an embodiment this is implemented using face detection which is correlated with user attentiveness. In other embodiments, different measures or indicators of user attentiveness may be used, for example infra-red or other proximity detectors, eye or pupil tracking devices, or even monitoring interaction with the system such as button presses. In this specification the term user attention state is used to indicate whether or not a user is attentive or paying attention to the media content being played. As noted, this can be determined by detecting the presence (attentive) or absence (non-attentive) of a face for example. One or a combination of attentiveness or user attention state detectors may be used, and this may be configured to depend on the content being used. For example audio-only content does not require the user to be directly in front of the speaker, but merely within the room say. Whereas a 3D movie may require a user to be positioned within a certain location space for optimum viewing.

In an embodiment, in order to implement the different quality levels, a media server which is supplying the media content is instructed by a media client of a user device to play the media content at a quality level dependent on the detection of a face. When the user device detects a face notionally viewing a screen onto which the media content would be played, the user device instructs the media server to transmit a higher or the highest quality media content. Whereas if no face is detected, which corresponds to viewer or user inattention (a user non-attention state), the user device or apparatus instructs the media server to reduce or degrade the media content quality, hence reducing the data rate. This may be achieved by the server switching to transmit a lower bit-rate stream to the user device, for example one coded using a higher compression ratio compression algorithm, or switching off one of a number of parallel streams or sessions each supporting a different layer in hierarchically encoded data. In an embodiment, over a period of lack of viewer attention or interest - corresponding to an absence of detected faces - the user device continues to instruct a reduction in media content quality level so that the media content is degraded over time, perhaps to no content at all. Then when user attention (eg a face) is again detected, the media content quality is increased, perhaps initially to the highest quality so that the user does not notice any reduction in quality of the content that is actually viewed. User inattention may occur for a number of reasons, for example because the user or viewer has left the room to get a drink, answer the telephone or door, or looked away to talk with someone else in the room. By degrading the quality of media content such as VoD which is not actually being viewed, network traffic and congestion is reduced in this embodiment.

In another embodiment, the media server multicasts or transmits multiple streams of the same media content at different quality levels or bit rates, and the user device switches between the streams depending on the user attention state determined. Alternatively the user device may switch off one of a number of parallel streams each supporting a different layer in hierarchically encoded content.

In another embodiment the media server may be integral with the attention detection apparatus, for example all contained as part of a computer system, rather than having the media server at a remote location. For example the embodiment may be implemented on a personal computer with a DVD player as the media server. In this case, no network is required in order to couple these two parts of the overall system. The use of degrading the quality level of the content in this embodiment can be used to reduce the power consumption of the computer by switching off the display when not required to show content.

In an embodiment, faces can be detected using a video or other camera and a face detection software package. The face detection software used in an embodiment is based on an algorithm disclosed in Wu J., Rehg J. M., Mullin M. D. (2004) Learning a Rare Event Detection Cascade by Direct Feature Selection, Advances in Neural Information Processing Systems vol.16 - see also http://www.cc.gatech.edu/-wujx/research.htm. However other face detection software could alternatively be used, for example Mobile-I available from Neven Vision. A media session controller can then instruct the media server to switch to a different quality media content stream in response to the output (face or non face) of the face detection software module.

### Brief Description of the Drawings

Embodiments will now be described with reference to the following drawings, by way of example only and without intending to be limiting, in which:
Figure 1 is a schematic showing a system according to an embodiment;
Figure 2 is a graph illustrating degradation of video on demand content in response to viewer non-attentiveness;
Figure 3 is a flow chart illustrating a method of operating a user device or apparatus for playing the media content;
Figure 4 is a flow chart illustrating a method of operating a media server for playing the media content;
Figure 5 illustrates a layered approach to streaming media content at different quality levels or bit rates;
Figure 6 illustrates a media server architecture for layered streaming media content; and
Figure 7 illustrates a streaming client at the user device for receiving layered streamed media content.

### Detailed Description

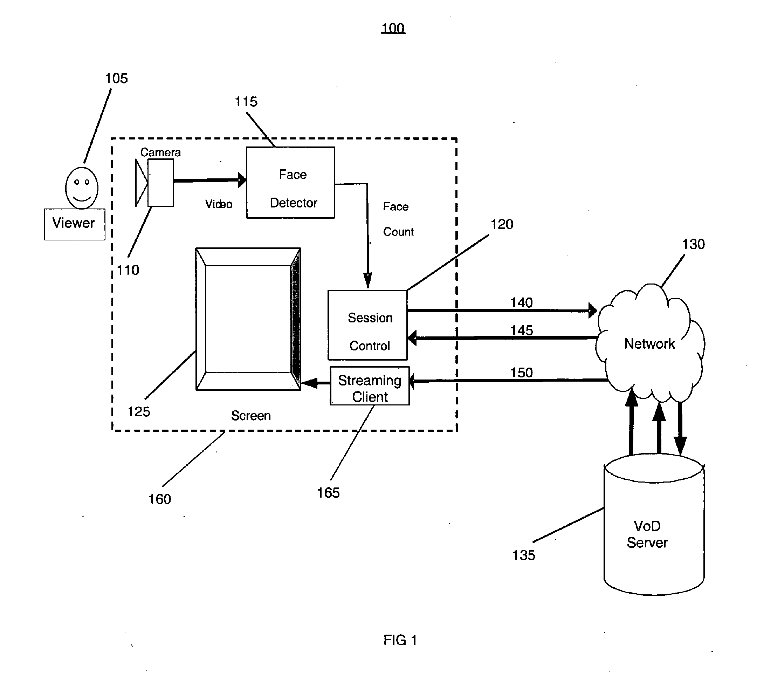

Figure 1 illustrates a system according to an embodiment, the system 100 comprising a user's face 105, a camera 110 or viewing equipment such as a web cam or other camera, a face detector 115, a session controller 120, a display screen 125, a network 130, and a video on demand (VoD) server 135. The face detector 115 and session controller 120 are typically implemented as software executed on a computing platform such as a personal computer or dedicated video content equipment such as a set-top box. The viewing screen 125 may be part of the computing platform, or a stand-alone device such as a plasma-TV screen for example. The network 130 may be a broadband Internet connection or a wireless network. A user device or apparatus 160 implements the face detection, session control and media content stream receiving and playing on the screen. This may be provided on a mobile phone or other wireless device for example, home entertainment equipment, or a computer for example. Media content servers 135 other than a VoD server may alternatively be used as will be understood by those skilled in the art.

The camera 110 is arranged to capture images pointing away from the viewing screen 125 in order to "see" user faces 105 viewing the viewing screen. Typically the camera 110 will be positioned at right angles to the plane of the viewing screen 125. The camera can be arranged such that the viewing angle of the screen and the camera's field of view are largely coincident; and this may be accomplished with additional lenses if necessary. Video or still images from the camera 110 are directed to the face detector 115, which may be implemented using various well known software packages on a computing or processor platform. Examples of face detection algorithms include: Wu et al (2004), Neven Vision's Mobile-I™ face recognition software developer's kit (SDK); Detecting Faces in Images: A Survey, Ming-Hsuan Yang, David J. Kriegman and Narendra Ahuja-http://vision.ai.uiuc.edu/mhyang/papers/pami02a.pdf*;* C-VIS Computer Vision and Automation GmbH Face Snap or similar technologies. The face detector function 115 simply reports whether a face has been detected or how many faces are currently detected within the field of view of the camera 110.

In this embodiment, the Wu et al algorithm can be configured to detect only "face-on" faces by training it only on face-on examples. From these examples it learns its own rules and these pre-learnt rules can then be used to only detect new faces when they are face-on. Pre-learnt rules may be distributed with the service, so that no learning is required in situ. This algorithm then gives the location of a rectangle within the camera image that contains the face. In an alternative embodiment there may be no restriction on the orientation of detected faces, merely whether faces are detected or not.

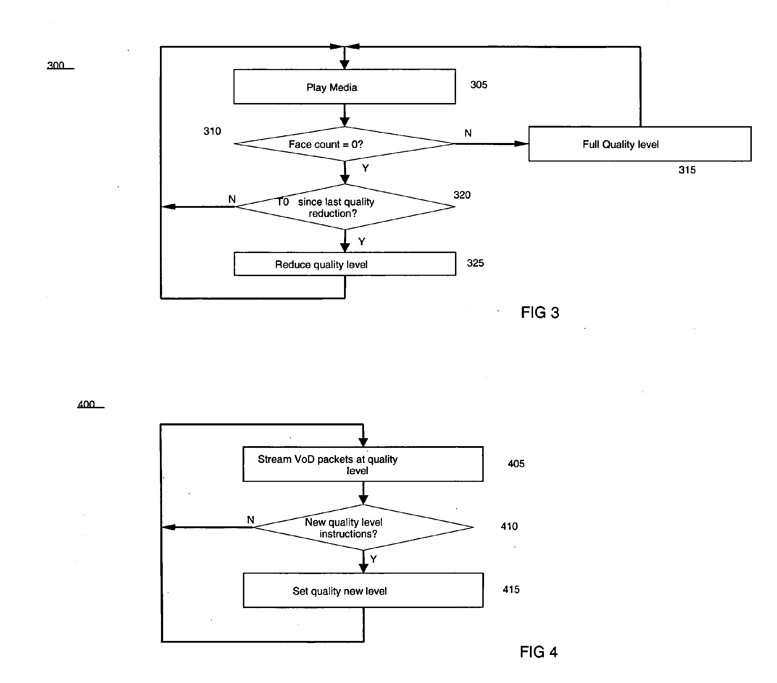

The session controller or control module 120 interprets the output of the face detector 115 as a user (105) attention state, and controls operation of the media store 135 dependent on the user attention state. The session control module 120 is typically implemented as a routine in a computing or processor based device, and an embodiment of this function (120) is illustrated in figure 3 and described in greater detail below.

The session controller 120 instructs the media store 135 over the network using known control packets and protocols 140 for example HTTP and RPC. The media server 135 comprises one or more media content such as movies in a plurality of quality formats or quality levels and can switch between these formats according to instructions 140 from the session control module 120. Various techniques used for implementing the switching will be known to those skilled in the art, for example server switching between streams at different bit rates, server provision of multiple bit rate streams which the user device or client can switch between, or parallel streams supporting different layers of hierarchically encoded content which can be switched on or off by either the server or client. A duplex control link (incorporating return path 145) may be used for more robust signalling, for example for server 135 to return acknowledgements following receipt of an instruction from the session module 120. The quality formats range from high quality (large files or high bit-rate streams) to low quality (smaller files or low bit-rate streams) which may be implemented using lower frame rates or image resolution as is known. Alternatively or additionally, different compression technologies may be used to provide smaller file sizes or lower bit-rate streams, and hence a reduced data rate over the network connection 150. As a further alternative, a single media content file or bit stream may be crafted to reduce its bit-rate to the user device 160 for example by sending only intra-coded frames (i-frames) and not the predicted or bi-predictive frames (p-frames and b-frames) as is known in some compression algorithms. Either way, the media content 150 provided to the user device 160 over the network 130 has a quality level controlled by the session control module 120 which in turn is dependent on whether a user face 105 has been detected or not (user attention or non-attention). This media content is received by the user device using a streaming client 165 such as RealPlayer^{™}, Windows Media^{™} or Apple Quicktime^{™} for example which has established a network connection 150 to the media server 135. The media content is then played by the streaming client 165 on the screen 125 and/or an audio transducer such as loud speakers (not shown) at the quality level at which it is received from the media server 135.

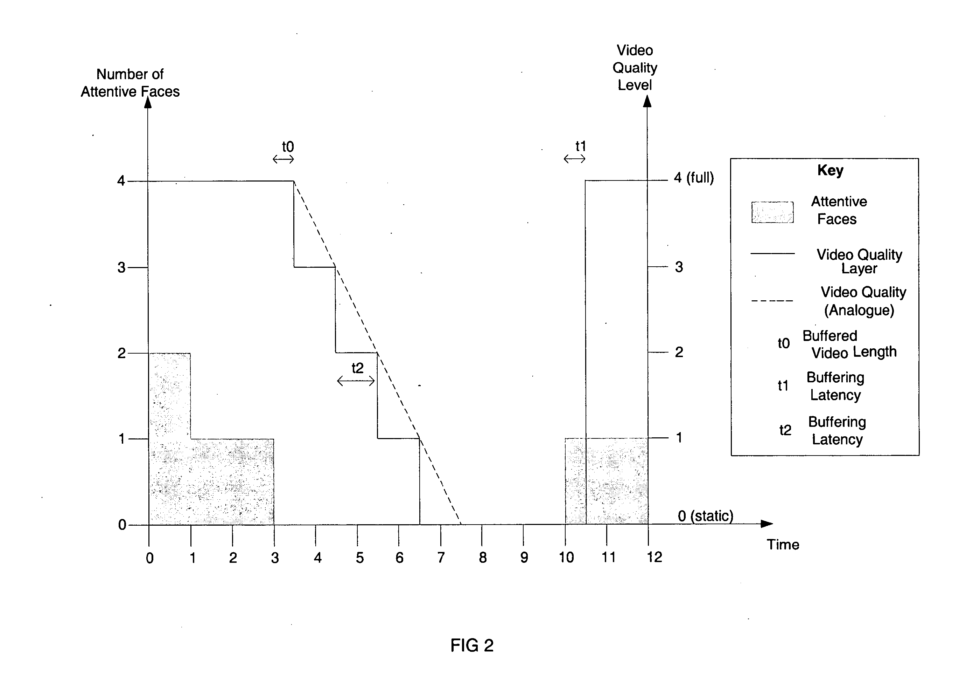

Figure 2 illustrates a graph of video quality over time. t0 is the time after which the video quality is lowered once zero faces are seen (user attention state is non-attentive). This will be largely dependant on the length of pre-buffered video available. The dotted line indicates the desired video quality if the VoD Server is able to deliver a gradual decline in quality. The solid line indicates how this may be approximated by switching between discrete quality layers or levels using different compression algorithms for example. This can be implemented using variable rate coding as is known. Whilst the detailed implementation of variable rate coding is beyond the scope of this specification, the interested reader is directed to A. Ortega, "Variable Bit-rate Video Coding", in Compressed Video over Networks, M.-T. Sun and A.-R. Reibman, Eds, pp. 343-382, Marcel Dekker, New York, NY, 2000 - see http://sipi.usc.edu/~ortega/Papers/OrtegaVBR-Chapter.pdf. The gradient of the decline may be controlled by the demands of the network (a congested network will benefit from a rapid descent) or the usage patterns of the television (related to the probability that the viewer will return, this may be learnt by the system or defined by the user or programme maker). t1 is the time taken for the system to show full video quality on the return of the viewer (user attention state is attentive). As such it should be minimised to avoid any disruption to the viewer's experience. In reality there may be intermediate quality video layers or levels which allow the video to start quickly, while allowing the higher rate layers to be initiated, as described in Walker, M. D., Nilsson, M., Jebb, T. and Turnbull R. Mobile Video-Streaming, BT Technology Journal, Vol. 21, No. 3. (September 2003), pp. 192-202 (Walker et al (2003)), especially in Section 4. t2 is the minimum time between quality degradations when the user is non-attentive, and is used here to avoid the quality level being degraded too quickly.

As the time increases from the last observation of an attentive face, the data-rate of the streamed video is successively decreased. This results in bandwidth savings across the Network 130. There is a decrease in the data sent from the VoD server which is instructed by the Television's or user device's Session Control 120 to the server 135 to adapt the stream. As already noted this may be accomplished by the server crafting an individual stream for the device or switching it to a prepared lower-rate source; or in a further alternative implementing the switching at the streaming client 165 by switching between multicast streams at different bit rates - various other methods of implementing the quality level change will also be known to those skilled in the art. The low-rate version may have a slower frame-rate, lower resolution or be otherwise degraded. As audio will be heard at a much wider range than the video, this will typically not be degraded (or at least not as quickly as the video) in a television based implementation for example.

Typically there will be a series of decreasing quality levels, of which the lowest is the static (probably black) screen. As the camera makes more observations without an attentive face, confidence grows that there are no viewers and the video can be safely reduced to the lowest quality level. In order to avoid the user noticing an apparent interruption, the full quality service should be reinstated as soon as practicable after attentive faces are observed. There is generally a degradation of perceptual quality of video and audio as the data-rate is decreased. However, some degradations are perceptually more significant than others at the same data-rate. For instance a decreased quality of the foreground will be noticed more than in the background. In an embodiment the degradation is such that the perception of quality decreases gradually, for example using the same approach detailed in Hands, D., Bourret, A., Bayart, D. (2005) Video QoS enhancement using perceptual quality metrics, BT Technology Journal, Vol. 23, No. 2. (April 2005), pp. 208-216.

At times of low network traffic it may be unnecessary to decrease the data-rate when the viewer is inattentive. Either the VoD Server or Session Control module may therefore be configured to measure the current network traffic and use this to determine if the data-rate is decreased or not. In an embodiment the return control path 145 may be used to refuse an instruction from the session control.

Face detection may sometimes be in error. As such the face detection function or session controller may be configured to aggregate results, for instance taking the statistical mode of the faces counted over a time window.

Figure 3 illustrates a method of operating the session controller 120 in more detail. In the method (300), the session controller monitors the output from the face detector 115, and issues instructions 140 to the media server 135 accordingly. The play step (305) indicates that the media content is being received over the network 130 from the media server 135 and is played on the screen 125, for example using a streaming client 165. The method (300) then determines whether or not faces have been detected by the face detection package 115 (310). If the output or count of the face detector 115 is greater than zero (310N) corresponding to a user attention state of "attentive", viewing or using, the session controller 120 instructs the media server to transmit or stream the media content at the highest quality level (315). This can be implemented by sending a suitable quality control packet or instruction to the media server 135. In an alternative embodiment, the session control 120 may instruct the streaming client 165 to switch between content streams at different bit rates. In this alternative arrangement, the server 135 is arranged to transmit or multicast multiple streams of the same content, but at different bit rates. In this case there is no need to instruct the server 135. Similarly where a layered encoding approach is used, the client can be configured to switch on or off parallel streams or sessions associated with the different layers in order to change the content quality. The method then returns to playing the media content (305) which will now or shortly be at a higher quality level (eg higher data rate).

In some embodiments the increased quality level may be implemented by rapidly increasing the quality level over a series of intermediate quality levels, in order to allow time for the higher quality levels to be buffered before playing. Again this is described in Walker et al (2003), especially Section 4. In this arrangement the server switches between different bit rate content streams so that the user device continues to receive the same stream or maintains the same session but at different bit rates according to the server switching. This avoids having any delay introduced whilst the high quality media content is buffered at the user device 160 before it can be played. An intermediate quality level media content stream may be played with little or no buffering immediately whilst the high quality media content is buffered then played so that there is no interruption.

If no faces are detected (310Y) corresponding to a user attentive state of "non-attentive" or not watching, the method determines whether a predetermined length of time (t0) has elapsed since the last face was detected or the last quality level reduction was instructed (320). This avoids the quality being reduced too quickly, for example if the viewer has only momentarily looked away from the screen 125. If the length of time has not been of sufficient duration (t2) since the last quality reduction (320N), then the method returns to playing the media content (305). If however there is been a predetermined period of time (t2) since the last face was detected or the last quality reduction instructed (320), then the method instructs the media server 135 to reduce the quality level by one quality level (325). This may continue so that over time, with no faces detected, the quality level of the media content eventually falls to the lowest level - which may be zero data rate or a black screen for example. Again the reduce quality instruction to the media server 135 may be in any suitable format.

The length of the time based parameters t0 and t2 can be configured according to system design. For example t0 may be derived from the storage/network constraints as it reflects the size of the video buffer at the client - assuming that already received frames don't want to be thrown-away. t2 may be set according to the speed at which the video is intended to decline.

Figure 4 illustrates a method of operating the media server 135 in more detail. In the method (400), the media server having set up a connection with the streaming client 165 on the user device 160 transmits or streams packets of media content to the streaming client (405). The media content streamed is at a particular quality level or data rate, and the same media content is also stored in different formats having different assigned quality levels. For example lower quality media content may be highly compressed, have a low frame rate or image resolution, or a combination of these. The method then "listens" for quality control instructions from the user device's session controller 120 (410). If no new quality level instruction is received (410N), then the media server continues to play the media content at the same quality level (405). If however a quality level instruction is received to increase or decrease the quality level (410Y), the method sets the streaming quality level to the instructed level by switching to a different content stream (415). This may be implemented simply by switching to transmitting a different content file, matching the play index of the previous stream to the new stream so that streaming of the new file starts at the right location. Again the mechanism for switching between quality levels is described in -Walker et al (2003) and WO03/009581 as noted previously. The method then transmits or streams the lower quality content (405) until instructed to again change this by the user devices session controller 120.

Whilst full face recognition has been described, alternative attention detecting mechanisms could alternatively be used, for example the eye gaze or pupil tracking approach described with respect to WO2004084054. As a further alternative, parts of a face or various combinations of facial features may be used such as detecting and/or recognising eyes and a nose, a mouth and eyes or eyes and mouth and nose.

The camera 110 used may be provided with a light source (not shown) to illuminate the faces for detection and recognition. Alternatively the ambient lighting may be relied upon, as this will be contributed to by the content displayed on the screen 125. This may be complemented by using a long exposure time for each frame, in this regard it is helpful that viewers tend to stay relatively motionless whilst watching video content. In addition various night mode and "camera-shake" facilities are already "built-in" to many digital cameras and can be used in this situation to improve the facial images provided to the face detector 115. Alternatively in order to simulate a long exposure, a sequence of images or frames can be summed such that each pixel in the resultant image is the sum of the luminance values in corresponding positions in the other frames. The summed images can then be used for face detection/recognition.

In order to minimise the number of "false positive" or "false negative" user attention state changes detected by the system, the face detector 115 or the session controller 120 can be configured to only recognise a change of attention status after this has been confirmed on a number of subsequent face detections. For example after 10 image frames from the camera all indicate that there is one less or one more face than previously detected. This might be implemented in the method of figure 3 for example at step 310 by implementing an additional routine holding the "face count" parameter to that noted at time x, then comparing the current "face count" parameter 10 times (once for each camera image say) at times x+1, x+2,...x+9, and then determining whether the average "face count" parameter is less than, greater than, or equal to the "last face count" parameter. Alternatively a statistical mode of the observations could be used to give an integer rather than a floating point number from the mean calculation.

As a further alternative, some face detection software packages can be configured to provide a confidence measure related to how confident the software module is that it has detected a face. This confidence measure or output can be used in an embodiment by the attention interpreter to decide when a face has become absent, for example by monitoring the confidence measure over time and detecting the absence of a face when the confidence measure drops below a predetermined threshold. In another alternative, detection of the absence of a face may only follow a characteristic temporal pattern such as a sharp drop-off in the confidence measure, rather than a gradual decline say which may be due to environmental changes.

As noted previously, various methods of adapting the bit-rate of the media content's transmission over the network to the receiving device 160 can be used with the embodiments. For example the streaming client 165 can set up multiple RTP sessions each associated with a different quality level of the content, for example the content in different compression formats or at lower frame rates. Then as the required quality level changes, either the media server 135 starts transmission at the different quality level on one session and stops transmission on the current quality level on another session, such that the bits received by the receiving device 160 change bit rate. Alternatively the same stream or session is maintained but the bit stream used by the server is switched, where each bit stream has a different bit rate. The received bits will be buffered and the rate at which the buffered bits are taken and decoded from the buffer by the client 165 will also be changed to correspond with the new bit rate.

In an alternative arrangement a hierarchical coding approach is used in which the original content for example video data is encoded into a number of discrete streams called layers, where the first layer consists of basic data of a relatively poor quality and where successive layers represent more detailed information so that layers can be added to increase the image quality or layers can be taken away to degrade the image or other content quality level - this effectively means that the bit rate is decreased when layers are removed or increased when layers are added providing the required changes in quality level. Layered video compression is known from the 1998 version of H.263, but may equally be any other codec, such as MPEG4. Each layer in the hierarchy is coded in such a way as to allow the quality of individual pictures to be enhanced and their resolution to be increased, and additional pictures to be included to increase the overall picture rate.

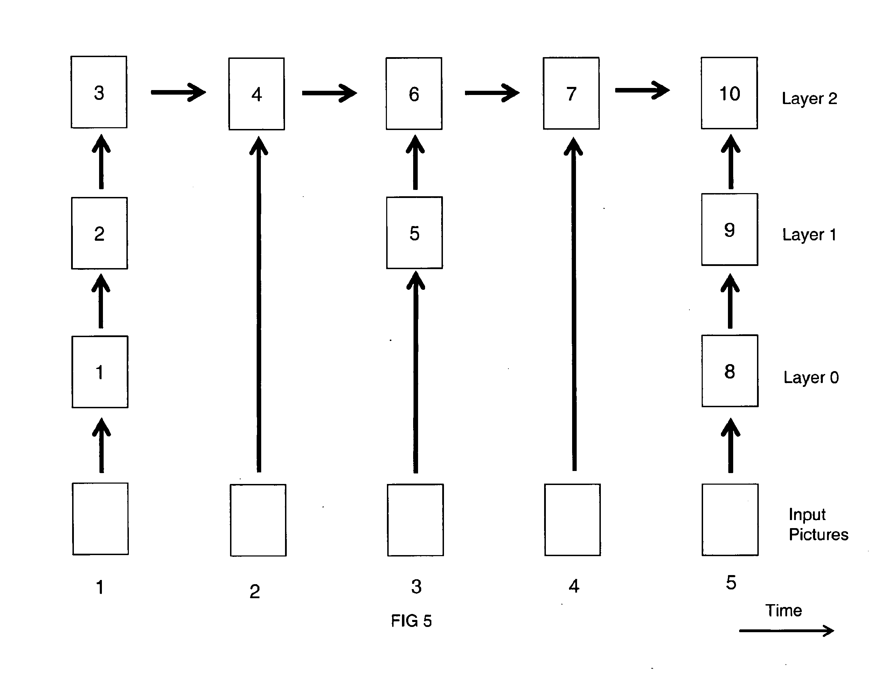

Figure 5 shows a typical dependency between pictures in an H.263 scalable layered codec, with boxes representing frames for each layer and arrows showing dependency between frames. The lowest row shows original, uncoded frames. The next row shows the lowest layer (Layer 0) of the hierarchy which is coded at half the frame rate of Layer 1. Frames in Layer 0 are predicted from the previously encoded frame, as in conventional video compression. Frames in Layer 1 may be predicted from the previously encoded frame in Layer 1, and if present, temporally simultaneous Layer 0 encoded frame. Frames in Layer 2 may be predicted from the previously encoded frame in Layer 2, and if present, temporally simultaneous Layer 1 and Layer 0 encoded frame. The H.263 specification allows for 15 layers, though a smaller number can be used in practical embodiments:

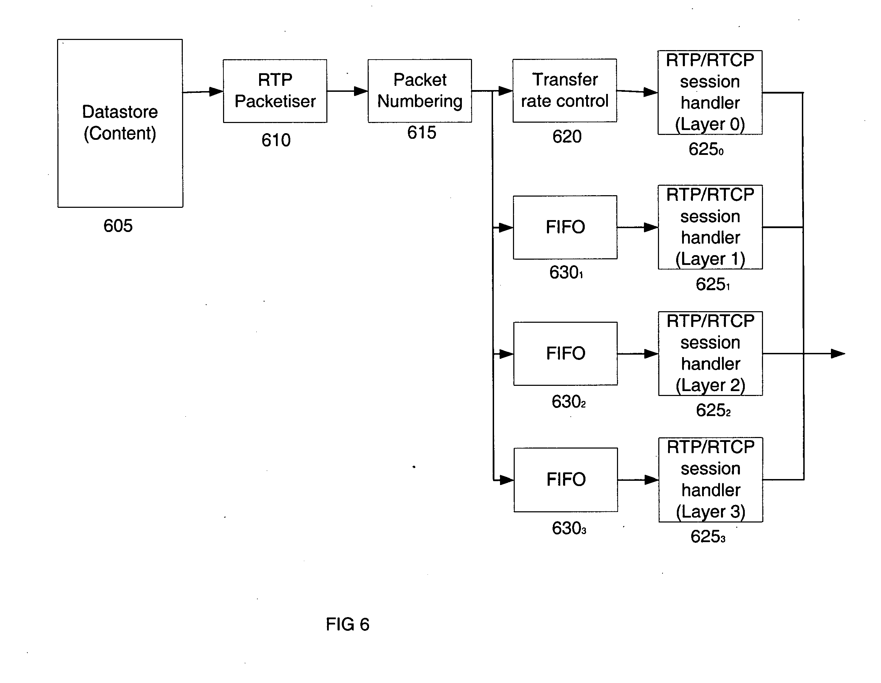

Figure 6 illustrates a media server 135 which uses the layered approach to content delivery. The media content in this case is stored in a data-store 605 already compressed, although it could be received from a live feed for example. The content is packetised by an RTP packetiser 610 according to the Real-time Transport Protocol (RTP), although other protocols could alternatively be used. The packetiser 610 attaches an RTP header to the packets, as well as an H.263 Payload Header as is known. The payload header contains video specific information such as motion vector predictors. The packets are numbered by a packet numbering function 615 in order to allow the receiving client to recover the correct order of the content packets. The layered encoding process uses a control strategy together with an output buffer for each layer in order to provide each layers constant bit rate output. Each layer is transmitted as an independent RTP session on a separate IP address by a corresponding session handler 625. The rate at which data is transmitted is controlled by the Transfer Rate Control module 620 which counts Layer 0 bytes to ensure that the correct number are transmitted in a given period of time. The transmission rate of the outer layers is smoothed and locked to the rate of Layer 0 using First-In-First-Out buffer elements 630.

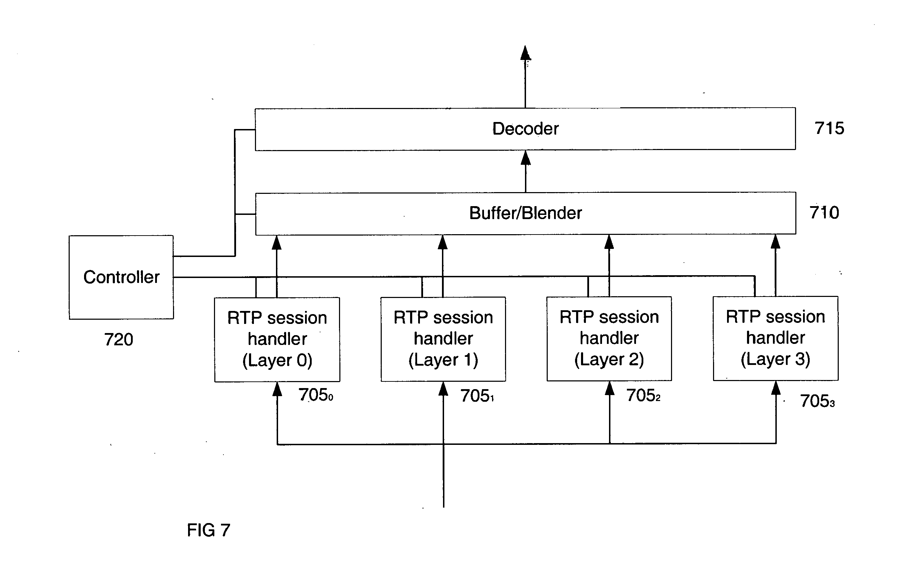

Figure 7 illustrates a streaming client 165 which uses the layered approach to content delivery and reception. Each RTP/RTCP session associated with each layer of encoded data has a session handler 705 at the client which is responsible for receiving RTP packets from the network. These packets are forwarded to a blender module 710 which receives the packets in the order in which they were received from the network. This may not be the order required for decoding because of packet inter-arrival jitter or packet loss. The blender 710 uses the packet numbers in the RTP headers to arrange the packets from each layer in the right order, and then combines the packets from all the received layers. The output from the blender 710 is a single stream of packets in the correct order for decoding. The packets are then sent to a decoder 715 for decoding into video samples or pictures. The client 165 also comprises a controller 720 which controls operation of the RTP session handlers 705 and blender/buffer 710.

In order to control or change the quality level of the received content, the session control 120 instructs the server 135 to drop or add a layer. This may be implemented in the present embodiment by the server instructing a corresponding RTP handler (for example 625₃ for Layer 3) to close a current session with corresponding handler (705₃) at the client 165, or to open a new session in order to transfer the contents of its output buffer 530₃. Alternatively the session control 120 may directly instruct the controller 720 in the client 165 to open or close an RTP session using a local session handler 705, depending on which layer is to be added/dropped.

As a yet further alternative, the various layer RTP sessions may be maintained open, but corresponding layer encoded packets may not be sent depending on the quality level currently required. This may be implemented at the FIFO buffers 630 for example, with packets being dropped after a certain time. Then when a higher quality level is requested, the packets are routed to the corresponding RTP handler 625 where the RTP session is already open so that there is no delay in increasing the quality level of the content provided.

In order to provide a fast transition from a low quality level to a high quality level, switching in additional streams or layers is done incrementally so that the quality can be built up by the blender 710. At the same time the buffer of the blender 710 is lengthened in order to accommodate the increased packet numbers associated with the higher bit rates of the higher quality levels. When the quality level is still low, the low bit-rate RTP session provides low bit rate packets to the blender which starts filling up its newly enlarged or lengthened buffer. Meanwhile the packets from the higher layers start arriving and can be combined with the low bit-rate packets waiting in the buffer in order to form the higher quality content. Initially the low rate packets can be sent to the decoder in order to maintain the content at an initial low rate, then increasingly enlarged batches of packets are sent from the buffer to the decoder to provide the higher quality level content.

Whilst the embodiments have been described with respect to encoded video files stored at the server, in other embodiments real-time video streaming for example from a camera or other source of unencoded or otherwise high quality video data could be provided. _This includes video data generated by a computational process on for instance a computer's graphics processor.. The data rate can then be adjusted dynamically as the real-time unencoded video data is encoded before transmission.

The embodiments may be implemented on a range of apparatus for example set-top boxes coupled to a VoD system over the Internet, or wireless mobile devices such as mobile phones where the network is a wireless network such as GPRS for example.

The skilled person will recognise that the above-described apparatus and methods may be embodied as processor control code, for example on a carrier medium such as a disk, CD-or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of operating an electronic device to play media content, the method comprising:
playing the media content at a first quality level;
determining an attention state of a user of the electronic device;
playing the media content at a second quality level in response to detecting a change in the user attention state.

2. A method according to claim 1, wherein determining the user attention state comprises detecting the presence or absence of a face within a predetermined area.

3. A method according to claim 1 or 2, wherein the media content is received over a network from a media server, and wherein the method further comprises switching from a first media content stream at a first bit rate corresponding to the first quality level to a second media content stream at a second bit rate corresponding to the second quality level in response to determining a change in the user attention state.

4. A method according to claim 1 or 2, wherein the media content is received over a network from a media server, and wherein the method further comprises instructing the media server to transmit the media content at the second quality level in response to detecting the change in the user attention state.

5. A method according to any one preceding claim, wherein the media content is played at an increased or highest quality level in response to detecting a face, and wherein the media content is played at a reduced quality level in response to detecting the absence of a face.

6. A method according to claim 5, wherein the media content is played at a further reduced quality level for each consecutive predetermined period in which the absence of a face is detected.

7. A method according to any one preceding claim, wherein the quality levels depend on one or a combination of: data rate, compression ratio, resolution, frame rate of the transmitted media content.

8. An electronic device for playing media content, the device comprising:
means for determining an attention state of a user of the electronic device;
means for playing the media content at a quality level dependent on the user attention state.

9. A device according to claim 8, wherein the means for determining the user attention state comprises means for detecting faces.

10. A device according to claim 8 or 9, wherein the playing means comprises:
a session control module;
means for receiving and playing media content transmitted from the media server;
the receiving means arranged to switch from a first media content stream at a first bit rate corresponding to the first quality level to a second media content stream at a second bit rate corresponding to the second quality level in response to the session control determining a change in the user attention state.

11. A device according to claim 8 or 9, wherein the playing means comprises:
a session control module for communicating with a media server;
means for receiving and playing media content transmitted from the media server;
the session control module arranged to instruct the media server to transmit the media content at a quality level dependent on the user attention state.

12. A device as claimed in any one of claims 8 to 11, wherein the media content is played at an increased or highest quality level in response to detecting a face, and wherein the media content is played at a reduced quality level in response to detecting the absence of a face.

13. A device as claimed in claim 12, wherein the media content is played at a further reduced quality level for each consecutive predetermined period in which the absence of a face is detected.

14. A system for playing media content and comprising: an electronic device for playing the media content as claimed in any one of claims 8 to 13; a network coupled to the device and a media server for transmitting the media content over the network to the device.

15. A carrier medium for carrying processor code which when executed on a processor causes the processor to carry out the method of any one of claims 1 to 7.
